# EUROPÄISCHE PATENTSCHRIFT

(11) **EP 1 815 162 B1**
(45) Veröffentlichungstag und Bekanntmachung des Hinweises auf die Patenterteilung: **28.03.2012**
(21) Anmeldenummer: 05802380.5
(22) Anmeldetag: 11.11.2005
(51) Int. Cl.: F16H 3/00, F16H 3/093, F16H 63/34, F16H 3/089

(54) **STUFENWECHSELGETRIEBE FÜR EIN KRAFTFAHRZEUG**
STEPPED TRANSMISSION FOR A MOTOR VEHICLE
MECANISME DE CHANGEMENT DE VITESSE A VARIATION DISCONTINUE POUR AUTOMOBILE

(30) Priorität: 23.11.2004 DE 102004056936
(43) Veröffentlichungstag der Anmeldung: 08.08.2007
(60) Teilanmeldung: 11195965.6
(73) Patentinhaber: GETRAG Getriebe- und Zahnradfabrik Hermann Hagenmeyer GmbH & Cie KG, 74199 Untergruppenbach (DE)
(72) Erfinder: BURGARDT, Georg, 74626 Bretzfeld (DE); SCHAARSCHMIDT, Reinhard, 75428 Illingen (DE); KAPP, Stefan, 74399 Walheim (DE)
(74) Vertreter: Steil, Christian
(86) Internationale Anmeldenummer: PCT/EP2005/012098
(87) Internationale Veröffentlichungsnummer: WO 2006/056325

(56) Entgegenhaltungen:
- EP-A- 0 288 779
- EP-A- 1 124 079
- DE-A1- 10 253 259
- FR-A- 2 837 251
- US-A1- 2004 200 300

## Beschreibung

Die vorliegende Erfindung betrifft ein Stufenwechselgetriebe für ein Kraftfahrzeug, wobei das Stufenwechselgetriebe eine Mehrzahl von Vorwärtsgangstufen und wenigstens eine Rückwärtsgangstufe aufweist.

Genauer gesagt betrifft die vorliegende Erfindung ein automatisiertes Stufenwechselgetriebe, bei dem das Ein- und Auslegen von Gangstufen durch Aktuatoren erfolgt. Als Aktuatoren können beispielsweise Schaltwalzen, die elektromotorisch angetrieben sind, hydraulische Linearaktuatoren, etc. verwendet werden. Insbesondere betrifft die vorliegende Erfindung Doppelkupplungsgetriebe (DKGs) und automatisierte Schaltgetriebe (ASGs).

Doppelkupplungsgetriebe sind beispielsweise bekannt aus den Druckschriften DE 198 21 164 A1, EP 0 083 747 A2, EP 0 046 373 A1. Ein gattungsgemäβes Getriebe ist aus der EP 0 288 779 bekannt.

Automatisierte Schaltgetriebe sind beispielsweise realisiert im Smart®, im BMW® M3 sowie im kürzlich vorgestellten BMW® M5. Im letzteren Fall handelt es sich um ein 7-Gang-ASG. Das letztgenannte ASG weist eine Radsatzanordnung auf, die nicht dem herkömmlichen H-Schema folgt. Insbesondere sind Schaltkupplungspakete, die zwei Schaltkupplungen aufweisen, nicht direkt aufeinanderfolgenden Gängen zugeordnet. Da die Schaltkupplungspakete jeweils eigene Aktuatoren aufweisen, kann das Auslegen eines Quellganges und das Einlegen eines Zielgangs mit einer gewissen zeitlichen Überschneidung erfolgen, so dass Gangwechsel sehr schnell vollzogen werden können.

Bei den Doppelkupplungsgetrieben sind die Vorwärtsgangstufen auf zwei Teilgetriebe aufgeteilt. Dabei sind generell ungerade Vorwärtsgangstufen einem Teilgetriebe zugeordnet und gerade Gangstufen sind dem anderen Teilgetriebe zugeordnet. Jedes Teilgetriebe ist durch eine eigene Kupplung mit der Abtriebswelle des Antriebsmotors verbunden. Mit einem DKG können durch überschneidendes Betätigen der zwei Kupplungen Gangwechsel ohne Zugkraftunterbrechung durchgeführt werden.

Bei beiden Getriebetypen (DKG bzw. ASG) besteht jedoch nach wie vor Raum für Verbesserungen.

Es ist demzufolge die Aufgabe der vorliegenden Erfindung, ein verbessertes Stufenwechselgetriebe für ein Kraftfahrzeug anzugeben.

Diese Aufgabe wird durch ein Stufenwechselgetriebe mit den Merkmalen des Anspruchs 1 gelöst. Berorzugte Meskmole sind Gegenstand der abhängigen Ansprüche.

Vorzugsweise ist das Stufenwechselgetriebe ein Doppelkupplungsgetriebe, wobei die Antriebswellenanordnung eine erste und eine zweite Antriebswelle aufweist, die einem ersten bzw. einem zweiten Teilgetriebe zugeordnet sind, und wobei dem ersten Teilgetriebe ungerade Vorwärtsgangstufen und dem zweiten Teilgetriebe gerade Vorwärtsgangstufen zugeordnet sind.

Bei dem Doppelkupplungsgetriebe dieser Bauart ist es besonders bevorzugt, wenn die zum Anfahren des Kraftfahrzeugs in Vorwärtsrichtung überwiegend verwendete Vorwärtsgangstufe und die Rückwärtsgangstufe verschiedenen Teilgetrieben zugeordnet sind.

Die zum Anfahren des Kraftfahrzeugs überwiegend verwendete Vorwärtsgangstufe ist in der Regel der erste Gang. Durch die Zuordnung zu jeweils einem anderen Teilgetriebe muss bei Fahrtrichtungswechseln nicht zwischen den Gangstufen geschaltet werden. Mit anderen Worten, wenn die Anfahrgangstufe und die Rückwärtsgangstufe demselben Teilgetriebe zugeordnet wären, müsste bei einem Fahrtrichtungswechsel immer zunächst die eine Gangstufe ausgelegt und die andere Gangstufe eingelegt werden. Dies führt insbesondere beim sogenannten Schaukelbetrieb bei einem festgefahrenen Fahrzeug zu unerwünscht langen Gangstufen-wechselzeiten.

Gemäß der bevorzugten Ausführungsform sind hingegen keine Schalt- bzw. Synchronisationsvorgänge notwendig, die die Schaltkupplungen (Synchronisierungen) belasten würden. Auch finden Anfahrvorgänge in Vorwärtsrichtung und in Rückwärtsrichtung generell mit unterschiedlichen getriebeeingangsseitigen Anfahrkupplungen statt. Demzufolge werden die zwei Anfahrkupplungen des Doppelkupplungsgetriebes gleichmäßiger belastet.

Vorzugsweise sind beim Starten des Kraftfahrzeugs die Rückwärtsgangstufe und die Anfahr-Vorwärtsgangstufe gleichzeitig eingelegt. Somit wird die Kaltschaltbarkeit des Getriebes verbessert, da für das Anfahren in beliebiger Richtung kein Einlegevorgang bei ruhendem Getriebe vorgenommen werden muss.

Gemäß einer weiteren bevorzugten Ausführungsform weist die Antriebswellenanordnung eine einzelne Antriebswelle auf.

Bei dieser Ausführungsform ist das Stufenwechselgetriebe beispielsweise ein automatisiertes Schaltgetriebe.

Derartige Stufenwechselgetriebe können in axialer Richtung besonders kompakt bauen.

Dabei können bei einem DKG die Vorwärtsgangstufen eines Teilgetriebes auf die zwei Abtriebswellen verteilt sein.

Die "Zuordnung" einer Gangstufe zu einer Abtriebswelle bedeutet, dass die Schaltkupplung, mit der diese Gangstufe ein- und ausgelegt wird, an dieser Abtriebswelle gelagert ist.

Es ist es von besonderem Vorteil, wenn die Rückwärtsgangstufe über die bestimmte Vorwärtsgangstufe getrieben ist.

Bei dieser Ausführungsform wird die Tatsache, dass zwei Abtriebswellen vorhanden sind, dazu verwendet, die für die Rückwärtsgangstufe notwendige Drehrichtungsumkehr zu realisieren. Mit anderen Worten ist bei dieser Ausführungsform keine weitere Nebenwelle zur Lagerung eines Drehrichtungsumkehrrades notwendig. Die Drehrichtungsumkehr erfolgt hierbei dadurch, dass die Drehrichtung zunächst über die bestimmte Vorwärtsgangstufe umgekehrt wird.

Von besonderem Vorteil ist es dabei, wenn die Rückwärtsgangstufe direkt über die bestimmte Vorwärtsgangstufe getrieben ist.

Bei dieser Ausführungsform ist kein weiteres Zahnrad zur Drehrichtungsumkehr notwendig.

Die Parksperre ist einer der Abtriebswellen zugeordnet ist.

Zunächst hat dies den Vorteil, dass die Unterbringung der Parksperre nur geringen Bauraum erfordert. Es ist insbesondere keine separate Parksperrenwelle erforderlich. Auch ist generell die Anordnung der Parksperre an einem nachgeschalteten Differentialgetriebe konstruktiv aufwändiger, erfordert mehr Anbauteile und erhöht die Kosten. Zusätzlich erfordert eine Parksperre an dem Differentialgetriebe eine massivere Ausführung, da dort die vom Abtrieb eingeleiteten Momente höher sind als auf einer der Abtriebswellen.

Mit anderen Worten werden die auf die Parksperre wirkenden Momente bzw. Kräfte reduziert, und zwar entsprechend einer Abtriebskonstantenübersetzung.

Hierzu ist anzumerken, dass die zwei Abtriebswellen der erfindungsgemäßen Ausführungsform generell über jeweils einen Abtriebskonstantenradsatz mit einem Differentialgetriebe verbunden sind.

Durch das Anordnen der Parksperre an einer der vorhandenen Abtriebswellen kann die Parksperre insgesamt kleiner und kostengünstiger ausgelegt werden.

Die parksperre ist in axialer Richtung mit einer bestimmten Vorwärtsgangstufe der anderen Abtriebswelle ausgerichtet ist.

Hierbei kann weiterer Bauraum eingespart werden.

Besonders vorteilhaft ist es, wenn die Rückwärtsgangstufe über ein separates Rad getrieben ist, das mit einem Losrad der bestimmten Vorwärtsgangstufe verbunden ist. In diesem Fall wird die an der einen Abtriebswelle zusätzliche axiale Länge für das weitere Rad an der anderen Abtriebswelle durch die Parksperre sozusagen "ausgefüllt".

Insgesamt ist es besonders vorteilhaft, wenn die bestimmte Vorwärtsgangstufe die zweite Vorwärtsgangstufe ist.

Da die Rückwärtsgangstufe und die zum Anfahren in Vorwärtsrichtung verwendete Vorwärtsgangstufe (in der Regel der erste Gang) vorzugsweise verschiedenen Teilgetrieben zugeordnet sind, ist es dann nicht möglich, die Rückwärtsgangstufe über den ersten Gang zu treiben.

Daher wird zu diesem Zweck vorzugsweise die zweite Vorwärtsgangstufe (der zweite Gang) verwendet. Hierbei lässt sich auch für das Anfahren im Rückwärtsgang noch eine hinreichend günstige Übersetzung einstellen. Insbesondere lässt sich eine Übersetzung für den Rückwärtsgang realisieren, die nahe ist an jener des ersten Ganges.

Gemäß einer weiteren bevorzugten Ausführungsform sind bei dem Doppelkupplungsgetriebe von den Vorwärtsgangstufen eines Teilgetriebes zwei Vorwärtsgangstufen unterschiedlichen Abtriebswellen zugeordnet, wobei diese zwei Vorwärtsgangstufen sich ein gemeinsames Festrad an der Antriebswellenanordnung teilen.

Bei dieser Ausführungsform wird eine sogenannte "Doppelverwendung" eines Festrades realisiert. Dies bringt Gewichts-, Bauraum- und Kosteneinsparungen mit sich. Es versteht sich, dass die zwei über ein gemeinsames Festrad in Beziehung gesetzten Arbeitsgangstufen eine bestimmte Übersetzungsrelation zueinander haben müssen.

Obgleich die Realisierung einer einzelnen Doppelverwendung in der Regel den besten Kompromiss zwischen Funktion, Kosten und Bauraum mit sich bringt, können von den Vorwärtsgangstufen der zwei Teilgetriebe jeweils zwei Vorwärtsgangstufen unterschiedlichen Abtriebswellen zugeordnet sein, wobei die jeweils zwei Vorwärtsgangstufen sich jeweils ein gemeinsames Festrad an der Antriebswellenanordnung teilen.

Bei dieser Ausführungsform werden somit zwei Doppelverwendungen realisiert.

Generell ist es natürlich auch denkbar, mehr als zwei Doppelverwendungen zu realisieren.

Gemäß einer weiteren bevorzugten Ausführungsform sind die erste Vorwärtsgangstufe (der erste Gang) und die zweite Vorwärtsgangstufe (der zweite Gang) einer der zwei Abtriebswellen zugeordnet.

Hierdurch findet die Übergabe hoher Momente vom ersten Gang zum zweiten Gang und umgekehrt ohne einen Abtriebswellenwechsel statt. Dies macht sich positiv bei der Geräusch- und Vibrationsentwicklung des Getriebes bemerkbar. Es ergibt sich kein zusätzlicher Aufwand an Kosten und Bauraum und keine Einschränkung der Funktion des Getriebes.

Ferner ist es vorteilhaft, wenn die erste Vorwärtsgangstufe der Abtriebswelle mit kürzerem Achsabstand zugeordnet ist.

Dies bewirkt einen kleinen Schaltraddurchmesser, was sich positiv auf den radialen Bauraum für die Achsseitenwellen auswirkt.

Insgesamt ist es vorteilhaft, wenn diejenigen Radsätze, die Vorwärtsgangstufen mit hoher Momentenübertragung zugeordnet sind, an den Enden der Antriebswellenanordnung angeordnet sind. Mit anderen Worten liegen Gänge mit großem Schaltraddurchmesser vorzugsweise an den Abtriebswellenenden. Gangstufen mit kleinen Schaltraddurchmessern werden vorzugsweise dazwischen angeordnet. Dies führt neben dem positiven Einfluss auf die Wellendurchbiegung zu sogenannten "Package"-Vorteilen. Die Schaltungsaktuatorik, (hydraulisch, pneumatisch, elektromechanisch, etc.) bevorzugt eine Schaltwalzenaktuatorik, kann dann zwischen den Gängen mit großen Schaltraddurchmessern radial nahe an den Abtriebswellen angeordnet werden.

Das erfindungsgemäße Stufenwechselgetriebe kann als Getriebe mit fünf oder sechs Vorwärtsgangstufen oder auch als Getriebe mit mehr als sechs Vorwärtsgangstufen, beispielsweise als 7-Gang-Getriebe ausgeführt werden. Die zuvor genannten Vorteile kommen bei einem 6-Gang-Getriebe besonders zum Tragen.

Die Schrägungsrichtung der Festräder wird vorzugsweise so ausgeführt, dass die Reaktionskräfte aus der Momentbelastung bei Zug in dieselbe Richtung wie die Kupplungsbetätigungskräfte wirken, die höher sind als die genannten Reaktionskräfte. Damit erfolgt bei Zug-Schubwechseln keine Axialbewegung der Antriebswellen, was sich positiv auf die Ansteuerbarkeit der Kupplungen auswirkt.

Insgesamt können erfindungsgemäß kompakte, preiswerte, funktionell hochwertige und robuste Stufenwechselgetriebe bereitgestellt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: ein Radsatzschema einer ersten Ausführungsform eines erfindungsgemäßen Doppelkupplungsgetriebes;
- Figur 2: eine schematische Querschnittsansicht des Doppelkupplungsgetriebes der Figur 1;
- Figur 3: ein Radsatzschema einer zweiten Ausführungsform eines erfindungsgemäßen Differentialgetriebes;
- Figur 4: ein Radsatzschema einer dritten Ausführungsform eines erfindungsgemäßen Differentialgetriebes;
- Figur 5: ein Radsatzschema einer vierten Ausführungsform eines erfindungsgemäßen Doppelkupplungsgetriebes;
- Figur 6: ein Radsatzschema einer fünften Ausführungsform eines erfindungsgemäßen Doppelkupplungsgetriebes;
- Figur 7: ein Radsatzschema einer sechsten Ausführungsform eines erfindungsgemäßen Doppelkupplungsgetriebes;
- Figur 8: ein Radsatzschema einer siebten Ausführungsform eines erfindungsgemäßen Doppelkupplungsgetriebes;
- Figur 9: ein Radsatzschema einer ersten Ausführungsform eines erfindungsgemäßen automatisierten Schaltgetriebes; und
- Figur 10: ein Radsatzschema einer Ausführungsform , die nicht zur Enfindung gehört.

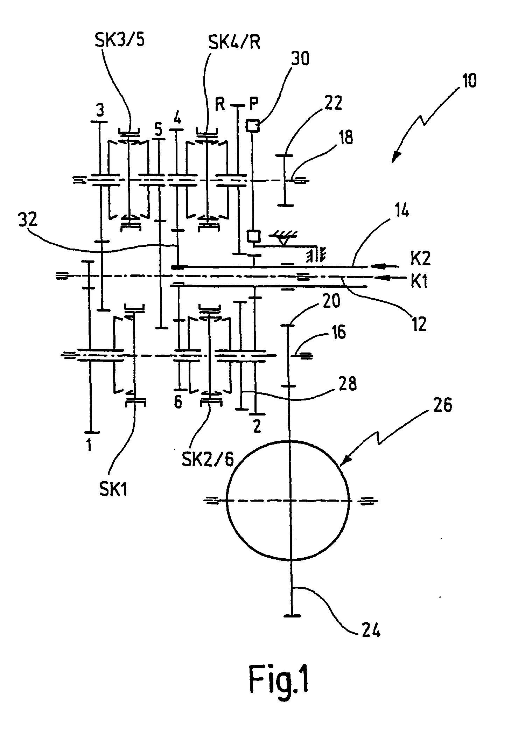

In Figur 1 ist eine erste Ausführungsform eines erfindungsgemäßen Doppelkupplungsgetriebes generell mit 10 bezeichnet.

Das Doppelkupplungsgetriebe 10 weist eine erste Antriebswelle 12 und eine zweite Antriebswelle 14 auf. Die zweite Antriebswelle 14 ist als Hohlwelle ausgebildet und konzentrisch zu der ersten Antriebswelle 12 angeordnet.

Die erste Antriebswelle 12 ist mit einer ersten Kupplung K1 verbindbar. Die zweite Antriebswelle 14 ist mit einer zweiten Kupplung K2 verbindbar.

Die erste Antriebswelle 12 erstreckt sich über eine größere axiale Entfernung als die zweite Antriebswelle und steht gegenüber dieser vor.

Das Doppelkupplungsgetriebe 10 weist ferner eine erste Abtriebswelle 16 und eine zweite Abtriebswelle 18 auf. Die zwei Abtriebswellen 16, 18 sind jeweils parallel zu den Antriebswellen 12, 14 angeordnet und über einen Abtriebskonstantenradsatz mit einem Differentialantriebsrad 24 eines Differentialgetriebes 26 verbunden.

Genauer gesagt weist der Abtriebskonstantenradsatz ein erstes Abtriebsrad 20 auf, das drehfest mit der ersten Abtriebswelle 16 verbunden ist, und weist ein zweites Abtriebsrad 22 auf, das drehfest mit der zweiten Abtriebswelle 18 verbunden ist.

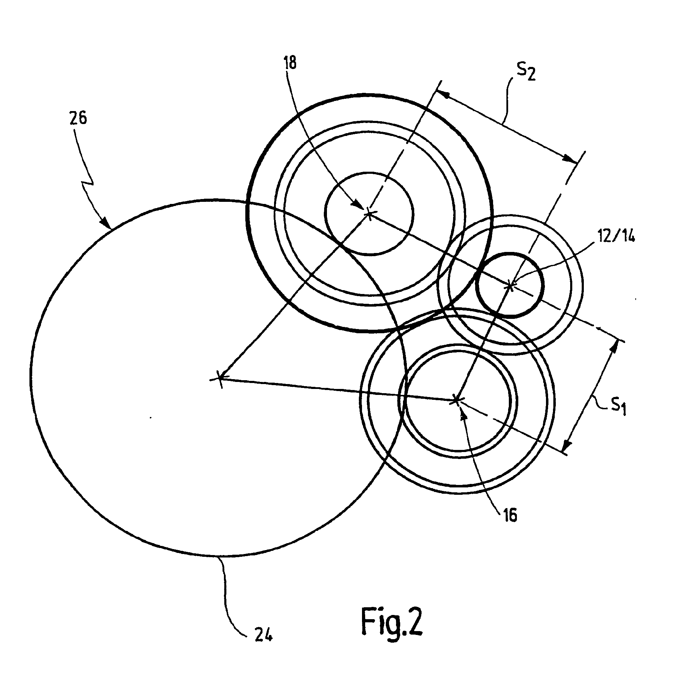

Die zwei Abtriebsräder 20, 22 sind axial miteinander ausgerichtet und stehen beide mit dem Differentialantriebsrad 24 in Eingriff, wie es insbesondere in Figur 2 zu erkennen ist.

Das Doppelkupplungsgetriebe 10 weist sechs Vorwärtsgangstufen 1-6 und eine Rückwärtsgangstufe R auf. Die ungeraden Vorwärtsgangstufen 1, 3, 5 sind einem ersten Teilgetriebe des Doppelkupplungsgetriebes 10 und somit der ersten Kupplung K1 zugeordnet.

Die geraden Vorwärtsgangstufen 2, 4, 6 sowie die Rückwärtsgangstufe sind einem zweiten Teilgetriebe des Doppelkupplungsgetriebes 10 und somit der zweiten Kupplung K2 zugeordnet.

Die Vorwärtsgangstufen 1, 2 und 6 sind der ersten Abtriebswelle 16 zugeordnet. Die Vorwärtsgangstufen 3, 4 und 5 und die Rückwärtsgangstufe R sind der zweiten Abtriebswelle 18 zugeordnet.

Ein Schaltkupplungspaket SK1 mit einer Schaltkupplung ist an der ersten Abtriebswelle 16 gelagert und der Vorwärtsgangstufe 1 zugeordnet. Ein Schaltkupplungspaket SK 2/6 mit zwei Schaltkupplungen ist den Vorwärtsgangstufen 2, 6 zugeordnet. Entsprechend sind ein Schaltkupplungspaket SK 3/5 mit zwei Schaltkupplungen den Vorwärtsgangstufen 3, 5 und ein Schaltkupplungspaket SK4/R den Gangstufen 4, R zugeordnet.

Die in den Schaltkupplungspaketen SK realisierten Schaltkupplungen sind beispielsweise als herkömmliche Synchronkupplungen ausgebildet.

An der ersten Abtriebswelle 16 sind in dieser Reihenfolge ausgehend vom Getriebeeingang aus angeordnet: erstes Abtriebsrad 20, Losrad für Vorwärtsgangstufe 2, ein Drehrichtungsumkehrrad 28 für die Rückwärtsgangstufe R, Schaltkupplungspaket SK2/6, Losrad für Vorwärtsgangstufe 6, Schaltkupplungspaket SK1, Losrad für Vorwärtsgangstufe 1.

Entsprechend sind an der zweiten Abtriebswelle 18 ausgehend von dem Getriebeeingang in dieser Reihenfolge angeordnet: zweites Abtriebsrad 22, eine Parksperre 30, Losrad der Rückwärtsgangstufe R, Schaltkupplungspaket SK4/R, Losrad für die Vorwärtsgangstufe 4, Losrad für die Vorwärtsgangstufe 5, Schaltkupplungspaket 3/5, Losrad für die Vorwärtsgangstufe 3.

Das Drehrichtungsumkehrrad 28 und das Losrad für die Vorwärtsgangstufe 2 sind drehfest miteinander verbunden. Das Drehrichtungsumkehrrad 28 ist axial mit dem Losrad der Rückwärtsgangstufe R an der zweiten Abtriebswelle 18 ausgerichtet. Entsprechend ist die Parksperre 30 axial mit dem Losrad für die zweite Vorwärtsgangstufe 2 an der ersten Abtriebswelle 16 ausgerichtet.

Ferner sind die Losräder der Vorwärtsgangstufen 4, 6 axial miteinander ausgerichtet und kämmen mit einem gemeinsamen Festrad 32. Mit anderen Worten wird eine Doppelverwendung der Vorwärtsgangstufen 4, 6 realisiert.

Bei dem Differentialgetriebe 10 liegen die Vorwärtsgangstufe 1 und der Rückwärtsgang auf verschiedenen Teilgetrieben und sind somit verschiedenen Kupplungen K1 bzw. K2 zugeordnet.

Die Rückwärtsgangstufe R wird über das Drehrichtungsumkehrrad 28 der Vorwärtsgangstufe 2 getrieben, also sozusagen über den gestuften zweiten Gang. Dabei kann eine Übersetzung ähnlich jener des ersten Ganges realisiert werden.

Die Parksperre 30 ist gegenüberliegend dem Losrad bzw. Schaltrad der Vorwärtsgangstufe 2 angebracht.

Es wird eine Doppelverwendung realisiert. Die Vorwärtsgangstufen 1, 2 befinden sich auf einer Abtriebswelle, der Abtriebswelle 16. Insgesamt sind vier Synchronkupplungspakte SK vorhanden.

Die Vorwärtsgangstufe 1 liegt auf der Abtriebswelle 16 mit kurzem Achsabstand. Die Gangstufen mit großem Schaltrad- bzw. Losraddurchmesser (vorliegend die Gangstufen 1 und 2 an der Abtriebswelle 16 bzw. die Gangstufen 3 und R an der Abtriebswelle 18) sind axial außen angeordnet, so dass eine Aktuatorik dazwischen radial nahe an den Abtriebswellen 16, 18 angeordnet werden kann.

Das Doppelkupplungsgetriebe 10 ist als automatisiertes Getriebe ausgeführt. Die Schaltkupplungspakete SK sind mit entsprechenden Aktuatoren verbunden. Entsprechend werden auch die Kupplungen K1 und K2 automatisiert betätigt.

Wie es in Figur 2 gezeigt ist, weist die Abtriebswelle 16 einen kürzeren Achsabstand S1 zu der Antriebswelle 12 auf als der Achsabstand S2 der zweiten Abtriebswelle 18 zu der Antriebswelle 12.

Nachfolgend werden weitere Ausführungsformen von erfindungsgemäßen Stufenwechselgetrieben beschrieben. Die nachstehend erörterten Ausführungsformen von erfindungsgemäßen Stufenwechselgetrieben haben generell einen ähnlichen Aufbau wie das Getriebe 10 der Figuren 1 und 2. Im Folgenden werden daher lediglich unterschiede zu der Ausführungsform der Figuren 1 und 2 erläutert. Im Übrigen bezieht sich die Beschreibung des Doppelkupplungsgetriebes 10 auch auf die nachstehend erörterten Ausführungsformen. Gleiche Elemente sind daher auch mit gleichen Bezugsziffern versehen.

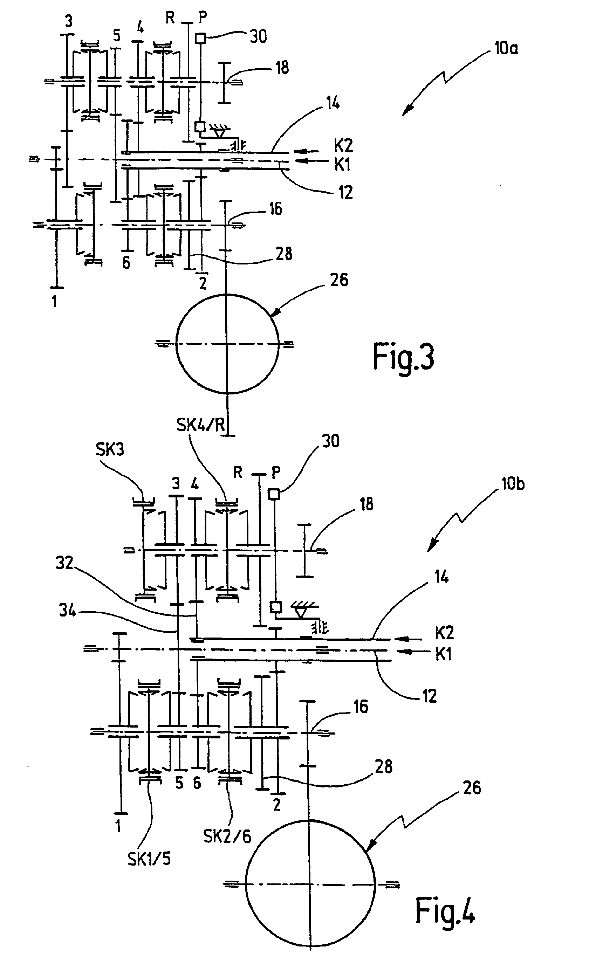

Figur 3 zeigt eine zweite Ausführungsform eines erfindungsgemäßen Doppelkupplungsgetriebes 10a.

Bei der Ausführungsform der Figur 3 sind die Radsätze der Vorwärtsgangstufen 4 und 6 nicht axial miteinander ausgerichtet, es wird somit keine Doppelverwendung realisiert. Dies hat den Vorteil, dass keine Einschränkungen in den Übersetzungen notwendig sind. Vielmehr sind die Übersetzungen modular veränderbar, beispielsweise für Varianten von Benzin/Diesel-Motoren. Gegenüber dem Doppelkupplungsgetriebe 10 der Figur 1 ergibt sich eine geringe Längenzunahme.

Figur 4 zeigt eine weitere Ausführungsform eines erfindungsgemäßen Doppelkupplungsgetriebes 10b.

Bei dem Doppelkupplungsgetriebe 10b sind im Gegensatz zu dem Doppelkupplungsgetriebe 10 der Figur 1 zwei Doppelverwendungen realisiert. Genauer gesagt sind die Vorwärtsgangstufen 4, 6 und die Vorwärtsgangstufen 3, 5 axial miteinander ausgerichtet. So teilen sich die Los- bzw. Schalträder der Vorwärtsgangstufen 3 und 5 ein Festrad 34 an der ersten Antriebswelle 12.

Auch hat sich hierbei die axiale Reihenfolge der einzelnen Elemente an den Abtriebswellen 16 bzw. 18 verändert. An der ersten Abtriebswelle 16 sind ausgehend von dem Getriebeeingang folgende Elemente in dieser Reihenfolge angeordnet: erstes Abtriebsrad 20, Losrad der zweiten Vorwärtsgangstufe, Drehrichtungsumkehrrad 28, Schaltkupplungspaket SK2/6, Losrad der Vorwärtsgangstufe 6, Losrad der Vorwärtsgangstufe 5, Schaltkupplungspaket SK 1/5, Losrad der Vorwärtsgangstufe 1.

Entsprechend sind an der zweiten Abtriebswelle ausgehend vom Getriebeeingang folgende Elemente in dieser Reihenfolge angeordnet: zweites Abtriebsrad 22, Parksperre 30, Losrad der Rückwärtsgangstufe R, Schaltkupplungspaket SK4/R, Losrad der Vorwärtsgangstufe 4, Losrad der Vorwärtsgangstufe 3, Schaltkupplungspaket SK3 für die dritte Vorwärtsgangstufe.

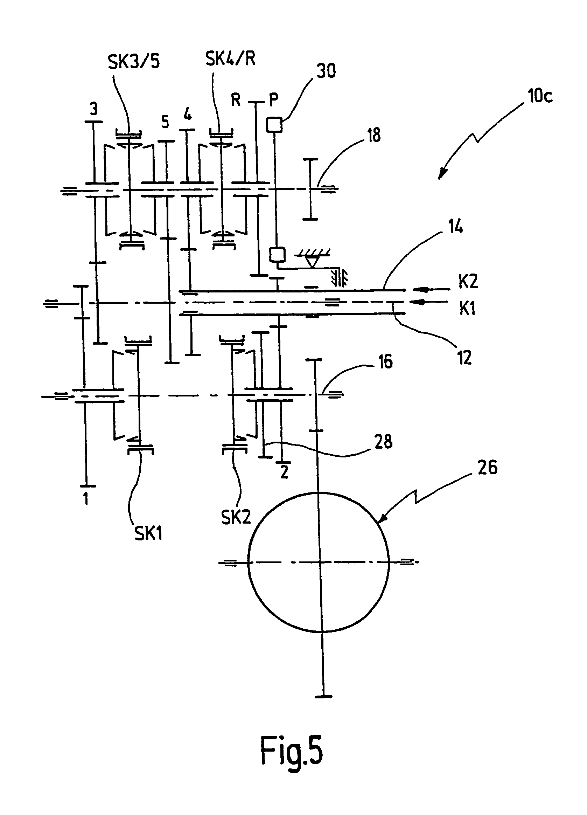

Figur 5 zeigt eine dritte Ausführungsform eines erfindungsgemäßen Doppelkupplungsgetriebes 10c.

Das Doppelkupplungsgetriebe 10c weist im Vergleich zu dem Doppelkupplungsgetriebe 10 der Figur 1 nur fünf Vorwärtsgangstufen auf. Dies ist insbesondere bei preiswerteren Fahrzeugen vorteilhaft, die keine sechs Vorwärtsgangstufen benötigen. Es sind keine Doppelverwendungen realisiert, so dass sich keine Einschränkungen hinsichtlich der Übersetzungen ergeben.

Die Reihenfolge der Elemente an der ersten Abtriebswelle 16 ist folgende: erstes Abtriebsrad 20, Losrad für Vorwärtsgangstufe 2, Drehrichtungsumkehrrad 28, Schaltkupplungspaket SK2, Schaltkupplungspaket SK1, Losrad für Vorwärtsgangstufe 1.

An der zweiten Abtriebswelle 18 sind folgende Elemente angeordnet: zweites Abtriebsrad 22, Parksperre 30, Losrad der Rückwärtsgangstufe R, Schaltkupplungspaket SK4/R, Losrad für die Vorwärtsgangstufe 4, Losrad für die Vorwärtsgangstufe 5, Schaltkupplungspaket SK3/5, Losrad für die Vorwärtsgangstufe 3.

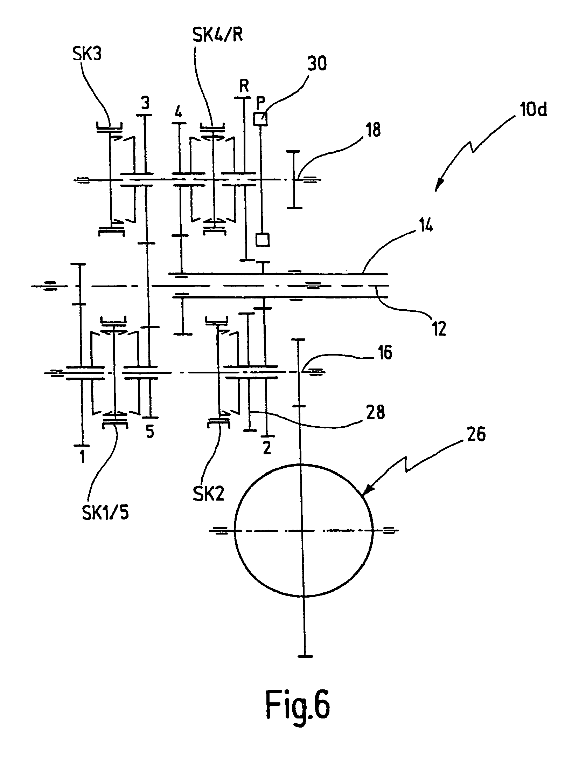

In Figur 6 ist eine weitere Ausführungsform eines erfindungsgemäßen Doppelkupplungsgetriebes 10d gezeigt.

Bei dem Doppelkupplungsgetriebe 10d handelt es sich wiederum um eine preiswerte Variante für Kraftfahrzeuge, die keine sechs Gänge benötigen. Es ergibt sich insgesamt eine kurze axiale Baulänge, da eine Doppelverwendung realisiert wird, und zwar für die Vorwärtsgangstufen 3, 5.

Die Reihenfolge der Elemente an der ersten Abtriebswelle 16 ist folgende: erstes Abtriebsrad 20, Losrad für Vorwärtsgangstufe 2, Drehrichtungsumkehrrad 28, Schaltkupplungspaket SK2, Losrad für Vorwärtsgangstufe 5, Schaltkupplungspaket SK1/5, Losrad für Vorwärtsgangstufe 1.

An der zweiten Abtriebswelle 18 sind angeordnet: zweites Abtriebsrad 22, Parksperre 30, Losrad für Vorwärtsgangstufe R, Schaltkupplungspaket SK 4/R, Losrad für Vorwärtsgangstufe 4, Losrad für Vorwärtsgangstufe 3, Schaltkupplungspaket SK3.

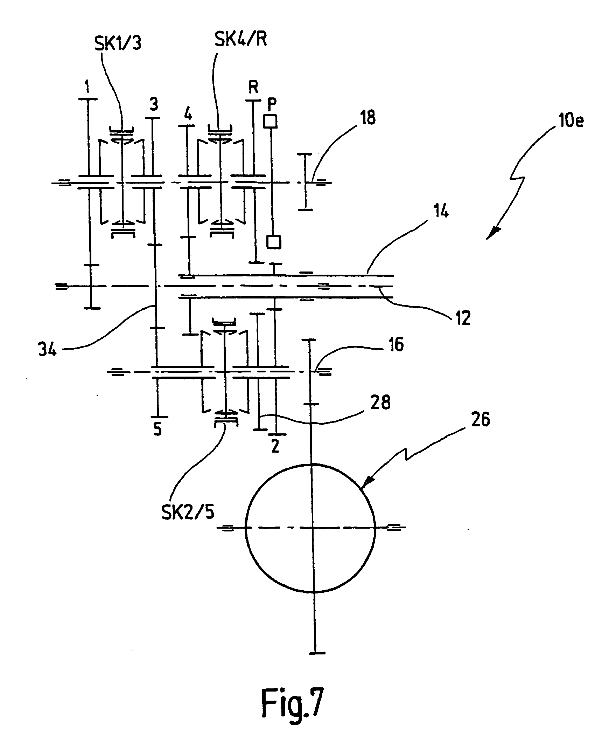

In Figur 7 ist eine weitere Ausführungsform eines erfindungsgemäßen Doppelkupplungsgetriebes 10e gezeigt.

Auch hier handelt es sich um eine preiswertere Variante für Fahrzeuge, die keine sechs Gänge benötigen. Ferner ist die Anzahl der Bauteile auf ein Minimum reduziert. Es sind nur drei Schaltkupplungspakete SK notwendig. Ferner ist das Doppelkupplungsgetriebe 10e in axialer Richtung besonders kurz, da eine Doppelverwendung realisiert wird (für Gangstufen 3, 5).

An der ersten Abtriebswelle 16 sind angeordnet: erstes Abtriebsrad 20, Losrad für Vorwärtsgangstufe 2, Drehrichtungsumkehrrad 28, Schaltkupplungspaket SK2/5, Losrad für Vorwärtsgangstufe 5.

An der zweiten Abtriebswelle 18 sind angeordnet: zweites Abtriebsrad 22, Parksperre 30, Losrad für Rückwärtsgangstufe R, Schaltkupplungspaket SK4/R, Losrad für Vorwärtsgangstufe 4, Losrad für Vorwärtsgangstufe 3, Schaltkupplungspaket SK1/3, Losrad für Vorwärtsgangstufe 1.

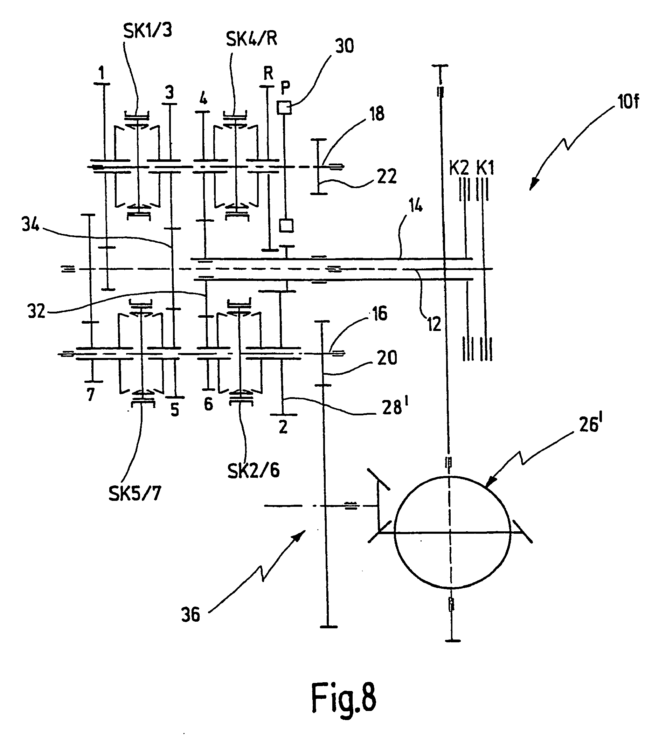

In Figur 8 ist eine weitere Ausführungsform eines erfindungsgemäßen Doppelkupplungsgetriebes 10f gezeigt.

Das Doppelkupplungsgetriebe 10f ist als 7-Gang-Getriebe ausgebildet und beinhaltet zwei Doppelverwendungen (für die Gangstufen 3, 5 bzw. 4, 6) und einen nachgeschalteten Triebsatz.

Das Getriebe ist geeignet für Inline-Anordnung und für eine Front-Quer-Anordnung.

An der ersten Abtriebswelle 16 sind angeordnet: das erste Abtriebsrad 20, ein Losrad 28' für die Vorwärtsgangstufe 2, das gleichzeitig als Drehrichtungsumkehrrad dient und mit dem Losrad der Rückwärtsgangstufe R an der zweiten Abtriebswelle 18 in Eingriff steht, ein Schaltkupplungspaket SK2/6, ein Losrad für die Vorwärtsgangstufe 6, ein Losrad für die Vorwärtsgangstufe 5, ein Schaltkupplungspaket SK5/7, ein Losrad für die Vorwärtsgangstufe 7.

An der zweiten Abtriebswelle 18 sind angeordnet: ein zweites Abtriebsrad 22, eine Parksperre 30, das Losrad für die Rückwärtsgangstufe R, ein Schaltkupplungspaket SK4/R, ein Losrad für die Vorwärtsgangstufe 4, ein Losrad für die Vorwärtsgangstufe 3, ein Schaltkupplungspaket SK1/3, ein Losrad für die Vorwärtsgangstufe 1.

Die zwei Abtriebsräder 20, 22 stehen mit einem Triebsatz 36 in Eingriff, der wiederum mit einem axial versetzt angeordneten Differential 26' verbunden ist.

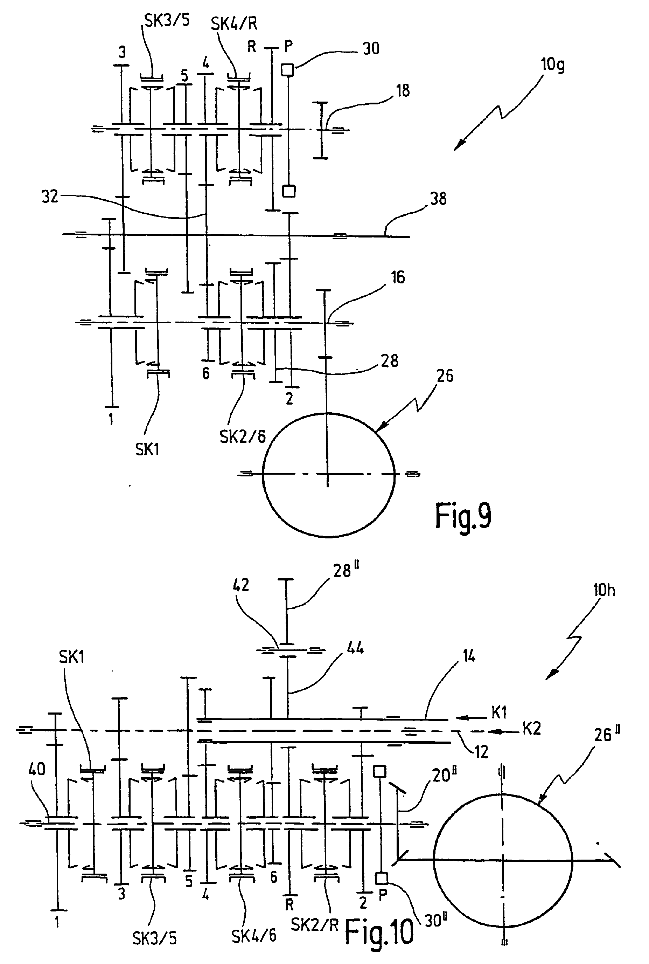

In Figur 9 ist eine erste Ausführungsform eines erfindungsgemäßen automatisierten Schaltgetriebes generell mit 10g bezeichnet.

Das automatisierte Schaltgetriebe 10g entspricht hinsichtlich des Radsatzaufbaus vollständig dem Doppelkupplungsgetriebe 10 der Figur 1. Einziger Unterschied ist, dass die Antriebswellenanordnung lediglich eine einzelne Antriebswelle 38 aufweist, an der sämtliche Festräder für die Vorwärtsgangstufen 1-6 festgelegt sind.

In Figur 10 ist eine Ausführungsform eines nicht erfindungsgemäßen Doppelkupplungsgetriebes generell mit 10h bezeichnet.

Das Doppelkupplungsgetriebe 10h ist als 2-Wellen-Getriebe realisiert und weist lediglich eine einzelne Abtriebswelle 40 auf, die parallel zu der Antriebswellenanordnung (bestehend aus den koaxial angeordneten Antriebswellen 12, 14) ausgerichtet ist.

An der einzelnen Abtriebswelle 40 sind in dieser Reihenfolge, ausgehen vom Getriebeeingang, folgende Elemente angeordnet: Abtriebsrad 20", das mit einem Differential 26" verbunden ist, Parksperre 30", Losrad für Vorwärtsgangstufe 2, Schaltkupplungspaket SK2/R, Losrad für Rückwärtsgangstufe R, Losrad für Vorwärtsgangstufe 6, Schaltkupplungspaket SK4/6, Losrad für Vorwärtsgangstufe 4, Losrad für Vorwärtsgangstufe 5, Schaltkupplungspaket SK3/5, Losrad für Vorwärtsgangstufe 3, Schaltkupplungspaket SK1, Losrad für Vorwärtsgangstufe 1.

An der Antriebswellenanordnung, genauer an der Antriebswelle 14, ist ferner ein zusätzliches Festrad 44 für die Rückwärtsgangstufe R festgelegt. Dieses steht in Eingriff mit einem Drehrichtungsumkehrrad 28", das an einer Nebenwelle 42 gelagert ist. Die Nebenwelle 42 ist parallel zu der Antriebswellenanordnung 12, 14 und der einzelnen Abtriebswelle 40 angeordnet.

Das Drehrichtungsumkehrrad 28" steht in Eingriff mit dem Losrad für die Rückwärtsgangstufe R an der Abtriebswelle 40.

Da keine Doppelverwendung realisiert wird, sind die Übersetzungen variabel. Die Vorwärtsgangstufe 1 und die Rückwärtsgangstufe R sind unterschiedlichen Teilgetrieben zugeordnet.

## Patentansprüche

1. Stufenwechselgetriebe (10) für ein Kraftfahrzeug, wobei das Stufenwechselgetriebe eine Mehrzahl von Vorwärtsgangstufen (1, 2, 3, 4, ..) und wenigstens eine Rückwärtsgangstufe (R) aufweist, mit:
- einer Antriebswellenanordnung (12, 14; 38),
- einer Abtriebswellenanordnung (16, 18; 40), wobei die Abtriebswellenanordnung (16, 18) zwei Abtriebswellen (16, 18) aufweist, die gemeinsam mit der Antriebswellenanordnung (12, 14; 38) eine 3-Wellenanordnung bilden,
- einer Mehrzahl von Radsätzen, die Losräder und Festräder aufweisen, wobei die Losräder an einer Wellenanordnung drehbar gelagert und mittels jeweiliger Schaltkupplungen (SK) drehfest mit der zugeordneten Wellenanordnung verbindbar sind, wobei eine bestimmte Vorwärtsgangstufe (2) einer Abtriebswelle (16) der Abtriebswellen (16, 18) zugeordnet ist und wobei die Rückwärtsgangstufe (R) der anderen Abtriebswelle (18) zugeordnet ist, und wobei die Rückwärtsgangstufe (R) über ein Rad (28) getrieben ist, das mit einem Losrad eines Radsatzes drehfest verbunden ist, der der bestimmten Vorwärtsgangstufe (2) zugeordnet ist,
**dadurch gekennzeichnet, dass**
eine Parksperre (30) einer Abtriebswelle (18) der Abtriebswellen (16, 18) zugeordnet ist, wobei die Parksperre (30) in axialer Richtung mit der bestimmten Vorwärtsgangstufe (2) der anderen Abtriebswelle (16) ausgerichtet ist.

2. Stufenwechselgetriebe nach Anspruch 1, wobei das Stufenwechselgetriebe (10) ein Doppelkupplungsgetriebe ist, wobei die Antriebswellenanordnung (12, 14) eine erste und eine zweite Antriebswelle (12, 14) aufweist, die einem ersten bzw. einem zweiten Teilgetriebe zugeordnet sind, und wobei dem ersten Teilgetriebe ungerade Vorwärtsgangstufen (1, 3, 5, ..) und dem zweiten Teilgetriebe gerade Vorwärtsgangstufen (2, 4, ..) zugeordnet sind.

3. Stufenwechselgetriebe nach Anspruch 2, wobei die zum Anfahren des Kraftfahrzeugs in Vorwärtsrichtung überwiegend verwendete Vorwärtsgangstufe (1) und die Rückwärtsgangstufe (R) verschiedenen Teilgetrieben zugeordnet sind.

4. Stufenwechselgetriebe nach Anspruch 1, wobei die Antriebswellenanordnung (38) eine einzelne Antriebswelle (38) aufweist.

5. Stufenwechselgetriebe nach einem der Ansprüche 1 - 4, wobei die bestimmte Vorwärtsgangstufe (2) die zweite Vorwärtsgangstufe (2) ist.

6. Stufenwechselgetriebe nach Anspruch 2, wobei von den Vorwärtsgangstufen eines Teilgetriebes zwei Vorwärtsgangstufen (3, 5; 4, 6) unterschiedlichen Abtriebswellen zugeordnet sind und wobei diese zwei Vorwärtsgangstufen (3, 5; 4, 6) sich ein gemeinsames Festrad (34; 32) an der Antriebswellenanordnung (12, 14; 38) teilen.

7. Stufenwechselgetriebe nach Anspruch 2, wobei von den Vorwärtsgangstufen der zwei Teilgetriebe jeweils zwei Vorwärtsgangstufen (3, 5; 4, 6) unterschiedlichen Abtriebswellen zugeordnet sind und wobei die jeweils zwei Vorwärtsgangstufen (3, 5; 4, 6) sich jeweils ein gemeinsames Festrad an der Antriebswellenanordnung (12, 14; 38) teilen.

8. Stufenwechselgetriebe nach einem der Ansprüche 1- 7, wobei die erste Vorwärtsgangstufe (1) und die zweite Vorwärtsgangstufe (2) einer der zwei Abtriebswellen (16, 18) zugeordnet sind.

9. Stufenwechselgetriebe nach einem der Ansprüche 1 - 8, wobei diejenigen Radsätze, die Vorwärtsgangstufen (1, 2, ..) mit hoher Momentenübertragung zugeordnet sind, an den Enden der Antriebswellenanordnung (16, 18; 40) angeordnet sind.

## Claims

1. A step variable transmission (10) for a motor vehicle, wherein the step variable transmission has a plurality of forward gear stages (1, 2, 3, 4, ...) and at least one reverse gear stage (R), having:
- a drive input shaft arrangement (12, 14; 38);
- an output shaft arrangement (16, 18; 40), wherein the output shaft arrangement (16, 18) has two output shafts (16, 18) which, together with the input drive shaft arrangement (12, 14; 38), form a 3-shaft arrangement;
- a plurality of wheel sets which have loose wheels and fixed wheels, wherein the loose wheels are rotatably mounted on a shaft arrangement and can be rotationally fixedly connected to the associated shaft arrangement by means of respective shift clutches (SK), and wherein a certain forward gear stage (2) is assigned to one output shaft (16) of the output shafts (16, 18) and wherein the reverse gear stage (R) is assigned to the other output shaft (18), and wherein the reverse gear stage (R) is driven via a wheel (28) which is rotationally fixedly connected to a loose wheel of a wheel set which is assigned to the certain forward gear stage (2),
**characterized in that**
a parking lock (30) is assigned to one (18) of the output shafts (16, 18), wherein the parking lock (30) is aligned in the axial direction with the certain forward gear stage (2) of the other output shaft (16).

2. The step variable transmission as claimed in claim 1, wherein the step variable transmission (10) is a twin-clutch transmission, wherein the drive input shaft arrangement (12, 14) has a first and a second drive input shaft (12, 14) which are assigned to a first and a second partial transmission respectively, and wherein the first partial transmission is assigned odd forward gear stages (1, 3, 5, ...) and the second partial transmission is assigned even gear stages (2, 4, ...).

3. The step variable transmission as claimed in claim 2, wherein the forward gear stage (1) which is used predominantly for starting the motor vehicle in the forward direction and the reverse gear stage (R) are assigned to different partial transmissions.

4. The step variable transmission as claimed in claim 1, wherein the drive input shaft arrangement (38) has a single drive input shaft (38).

5. The step variable transmission as claimed in one of claims 1 - 4, wherein the certain forward gear stage (2) is the second forward gear stage (2).

6. The step variable transmission as claimed in claim 2, wherein two forward gear stages (3, 5; 4, 6) of the forward gear stages of one partial transmission are assigned to different output shafts, and wherein said two forward gear stages (3, 5; 4, 6) share a common fixed wheel (34; 32) on the drive input shaft arrangement (12, 14; 38).

7. The step variable transmission as claimed in claim 2, wherein two forward gear stages (3, 5; 4, 6) of the forward gear stages of the two partial transmissions are in each case assigned to different output shafts, and wherein the respective two forward gear stages (3, 5; 4, 6) share in each case one common fixed wheel on the drive input shaft arrangement (12, 14; 38).

8. The step variable transmission as claimed in one of claims 1 - 7, wherein the first forward gear stage (1) and the second forward gear stage (2) are assigned to one of the two output shafts (16, 18).

9. The step variable transmission as claimed in one of claims 1 - 8, wherein those wheel sets which are assigned to the forward gear stages (1, 2, ...) which transmit high torques are arranged at the ends of the drive input shaft arrangement (16, 18; 40).

## Revendications

1. Mécanisme de changement de vitesse (10) pour un véhicule automobile, le mécanisme de changement de vitesse comportant une pluralité d'étages de rapport de marche avant (1, 2, 3, 4, ...) et au moins un étage de rapport de marche arrière (R), avec :
- un agencement d'arbre d'entraînement en entrée (12, 14 ; 38) ;
- un agencement d'arbre d'entraînement en sortie (16, 18 ; 40), l'agencement d'arbre d'entraînement en sortie (16, 18) comportant deux arbres d'entraînement en sortie (16, 18) formant ensemble un agencement à 3 arbres avec l'agencement d'arbre d'entraînement en entrée (12, 14 ; 38) ;
une pluralité d'essieux comportant des roues mobiles et des roues fixes, les roues mobiles étant disposées de façon à pouvoir pivoter au niveau d'un agencement d'arbre et étant reliées solidairement en rotation avec l'agencement d'arbre associé à l'aide d'embrayages de changement de vitesse (SK) respectifs, un étage de rapport de marche avant (2) défini d'un arbre d'entraînement en sortie (16) étant associé aux arbres d'entraînement en sortie (16, 18) et l'étage de rapport de marche arrière (R) étant associé à l'autre arbre d'entraînement en sortie (18) et l'étage de rapport de marche arrière (R) étant entraîné par le biais d'une roue (28) reliée solidairement en rotation à une roue mobile d'un essieu associé à l'étage de rapport de marche avant (2) défini ;
**caractérisé en ce que** :
un frein à main (30) d'un arbre d'entraînement en sortie (18) est associé aux arbres d'entraînement en sortie (16, 18), le frein à main (30) étant aligné dans la direction axiale avec l'étage de rapport de marche avant (2) défini de l'autre arbre d'entraînement en sortie (16).

2. Mécanisme de changement de vitesse selon la revendication 1, le mécanisme de changement de vitesse (10) étant un engrenage à double embrayage, l'agencement d'arbre d'entraînement en entrée (12, 14) comportant un premier et un deuxième arbre d'entraînement en entrée (12, 14) associés à une première et/ou une deuxième partie d'engrenage et les étages de rapport de marche avant (1, 3, 5, ...) impairs étant associés à la première partie d'engrenage et les étages de rapport de marche avant (2, 4, ...) pairs étant associés à la deuxième partie d'engrenage.

3. Mécanisme de changement de vitesse selon la revendication 2, l'étage de rapport de marche avant (1) principalement utilisé pour démarrer le véhicule automobile dans la direction avant et l'étage de rapport de marche arrière (R) étant associés à différentes parties d'engrenage.

4. Mécanisme de changement de vitesse selon la revendication 1, l'agencement d'arbre d'entraînement en entrée (38) comportant un arbre d'entraînement en entrée (38) unique.

5. Mécanisme de changement de vitesse selon l'une quelconque des revendications 1 à 4, l'étage de rapport de marche avant (2) défini correspondant au deuxième étage de rapport de marche avant (2).

6. Mécanisme de changement de vitesse selon la revendication 2, deux étages de rapport de marche avant (3, 5 ; 4, 6) parmi les étages de rapport de marche avant d'une partie d'engrenage étant associés à différents arbres d'entraînement en sortie et ces deux étages de rapport de marche avant (3, 5 ; 4, 6) partageant une roue fixe (34 ; 32) commune au niveau de l'agencement d'arbre d'entraînement en entrée (12, 14 ; 38).

7. Mécanisme de changement de vitesse selon la revendication 2, respectivement deux étages de rapport de marche avant (3, 5 ; 4, 6) parmi les étages de rapport de marche avant des deux parties d'engrenage étant associés à différents arbres d'entraînement en sortie et les respectivement deux étages de rapport de marche avant (3, 5 ; 4, 6) partageant respectivement une roue fixe commune au niveau de l'agencement d'arbre d'entraînement en entrée (12, 14 ; 38).

8. Mécanisme de changement de vitesse selon l'une quelconque des revendications 1 à 7, le premier étage de rapport de marche avant (1) et le deuxième étage de rapport de marche avant (2) étant associés à un des deux arbres d'entraînement en sortie (16, 18).

9. Mécanisme de changement de vitesse selon l'une quelconque des revendications 1 à 8, les essieux associés aux étages de rapport de marche avant (1, 2, ...) à transmission de couple élevée étant disposés au niveau des extrémités de l'agencement d'arbre d'entraînement en entrée (16, 18 ; 40).
